# EUROPÄISCHE PATENTANMELDUNG

(11) **EP 4 199 525 A1**
(43) Veröffentlichungstag der Anmeldung: **21.06.2023**
(21) Anmeldenummer: 21216002.2
(22) Anmeldetag: 20.12.2021
(51) Int. Cl.: H04N 21/472, H04N 21/4728, H04N 21/431, H04N 21/43

(54) **COMPUTERIMPLEMENTIERTES VERFAHREN ZUR WAHLWEISEN ODER GLEICHZEITIGEN ANZEIGE ZUMINDEST ZWEIER VIDEOS**

(71) Anmelder: The Color Grading Company GmbH, 50829 Köln (DE)
(72) Erfinder: POERSCHKE, Thomas, 50259 Pulheim (DE); KUMAR, Jitendra, 226028 Uttar Pradesh (IN); SCHÄFER, Uwe, 50737 Köln (DE)
(74) Vertreter: Kirschner, Sebastian

(57) **Zusammenfassung**

Die Erfindung betrifft ein computerimplementiertes Verfahren zur wahlweisen oder gleichzeitigen Anzeige zumindest zweier Videos (1, 2), wobei ein Client (3) zumindest eine Anzeige (4) und ein Bedienelement (5) aufweist, wobei die zumindest zwei Videos (1, 2) synchron mittels eines Mehrkanal-Mediaplayers (Multichannel Mediaplayer, MCMP (6)) abgespielt werden, wobei die zumindest zwei Videos (1, 2) synchron durch gemeinsame Steuerungselemente (7) gesteuert werden, so dass die zumindest zwei Videos (1, 2) gemeinsam gestartet, oder pausiert werden, wobei die Steuerungselemente (7) mittels des MCMPs (6) bereitgestellt werden, wobei die Steuerungselemente (7) mittels des Bedienelementes (5) von einem Benutzer bedienbar sind, wobei zumindest zwei Darstellungsarten (8, 9) die zumindest zwei Videos (1, 2) mittels des MCMPs (6) bereitgestellt werden, wobei in einer ersten Darstellungsart (8) lediglich eines der zumindest zwei Videos (1, 2) mittels der Anzeige (4), insbesondere in einer Einzelbildansicht, dargestellt wird, wobei bei einem Umschalten des mittels der Anzeige (4) dargestellten Videos (1, 2) in der ersten Darstellungsart (8) von einem ersten Video (1) zu einem zweiten Video (2) oder umgekehrt das Umschalten auch während des Abspielens unterbrechungsfrei erfolgt, wobei in einer zweiten Darstellungsart (9) zumindest zwei der Videos (1, 2) zumindest teilweise nebeneinander dargestellt werden. Das computerimplementierte Verfahren zur wahlweisen oder gleichzeitigen Anzeige zumindest zweier Videos wird verbessert, indem die zumindest zwei Videos (1, 2) und der MCMP (6) von einem Server (10) oder von mehreren Servern (10) an den Client (3) übertragen werden, wobei der MCMP (6) mittels eines Webbrowsers (11) ausgeführt wird.

## Beschreibung

Die Erfindung betrifft ein computerimplementiertes Verfahren zur wahlweisen oder gleichzeitigen Anzeige zumindest zweier Videos mit den Merkmalen des Oberbegriffs des Patentanspruchs 1.

Im Stand der Technik sind verschiedene computerimplementierte Verfahren zur Videoanzeige und zur Videobearbeitung bekannt. Ein Client weist dazu zumindest eine Anzeige und ein Bedienelement auf. Zumindest zwei Videos werden synchron mittels eines Mehrkanal-Mediaplayers (Multichannel Mediaplayer, MCMP) abgespielt. Beide Videos werden synchron durch gemeinsame Steuerungselemente gesteuert, so dass die beiden Videos gemeinsam gestartet, gestoppt oder pausiert werden. Die Steuerungselemente werden mittels des MCMPs bereitgestellt, wobei die Steuerungselemente mittels des Bedienelementes von einem Benutzer bedienbar sind. Zumindest zwei Darstellungsarten der beiden Videos werden mittels des MCMPs bereitgestellt. In einer ersten Darstellungsart wird mittels der Anzeige lediglich eines der zumindest zwei Videos im Vordergrund dem anderen Video überlagert dargestellt. Bei einem Umschalten des mittels der Anzeige dargestellten Videos in der ersten Darstellungsart von einem ersten Video zu einem zweiten Video oder umgekehrt erfolgt das Umschalten deckungsgleich und optisch und zeitlich nahtlos ohne Unterbrechung und ohne Verzögerung. In einer zweiten Darstellungsart werden zumindest zwei der Videos mittels einer Bildteilung gleichzeitig zusammen dargestellt.

Ein solches Verfahren ist z.B. aus der US 8,994,828 B2 bekannt. Die US 8,994,828 B2 zeigt ein Verfahren zum Vergleichen von zwei Videos, insbesondere von zwei unterschiedlich komprimierten Videos. Die beiden Videos weisen den gleichen Inhalt auf, so dass die Qualität der beiden Videos zueinander vergleichbar ist. Um den Vergleich zu ermöglichen, werden die beiden Videos mittels jeweils eines Players abgespielt. Aus den mittels der beiden Player generierten Signalen wird ein gemeinsames Signal errechnet und mittels eines Displaysystems dargestellt. Ein Bediener kann zwischen den Videos auswählen, die Videos starten, die Videos stoppen und vor- oder zurückspulen. Zwischen den beiden Videos ist ohne eine für den Bediener sichtbare Verzögerung hin- und her schaltbar. Weiterhin ist denkbar, dass die beiden Videos nebeneinander in einer geteilten Ansicht angezeigt werden, wobei eine Grenzlinie zwischen den beiden Videos durch einen Bediener verschiebbar ist. Es kann neben der Qualität z.B. die Helligkeit der beiden Videos miteinander verglichen werden. Es können mittels des Verfahrens auch drei oder mehr Videos miteinander verglichen werden. Das Verfahren ist mittels eines oder mehrerer Computer ausführbar, wobei mittels einer Ein-/Ausgangsschnittstelle alle notwendigen Protokolle ausführbar sind.

Das existierende technische Verfahren zur Steuerung von zumindest zwei zueinander synchron laufenden Videos mittels eines Bedienelementes über ein Benutzerinterface basiert entweder auf Programmen, die zuvor auf dem Client installiert werden müssen und / oder es Bedarf extra dafür gebaute Maschinen. Das Wissen über die entsprechenden Programme und / oder Maschinen sowie die entsprechenden Programme und / oder Maschinen selbst müssen erst beschafft werden. Gegebenenfalls muss man sich für den Zugriff auf die entsprechenden Programme und / oder Maschinen dorthin begeben, wo sich die entsprechenden Programme und / oder Maschinen befinden. Das ist immer mit Aufwand, Zeit und Kosten verbunden. Wo mehrere Personen gemeinsam an dem gleichen Material arbeiten, gibt es Abhängigkeiten, wie zum Beispiel, sich für gemeinsame Besprechungen zusammenzufinden. Dadurch werden Entscheidungen oft verzögert, insbesondere in der Medienbranche. Heutzutage ist die Ungebundenheit an Ort und Zeit zu einem hohen Gut in unserem Leben geworden. Entscheidungen sollen ohne örtliche und zeitliche Bindungen getroffen werden können. Auf der anderen Seite will man aber auch nicht auf die besten technischen Voraussetzungen verzichten. Nichts ist unbefriedigender, als Entscheidungen auf der Grundlage mangelnder technischer Gegebenheiten zu treffen. Doch genau das ist häufig der Fall, wenn man nicht zu einer bestimmten Zeit an einem bestimmten Ort sein kann. Zum Beispiel ein Kunde verfügt bei der Betrachtung von Videos nicht über die gleichen technischen Möglichkeiten, wie der Profi mit seinen Spezialinstrumenten, nämlich den entsprechenden Programmen und / oder Maschinen.

Das bekannte Verfahren weist weiterhin das Problem auf, dass jedes Video in einem separaten Player abgespielt wird. Es muss also pro Video ein separater Player zur Verfügung gestellt werden. Das bekannte Verfahren weist weiterhin das Problem auf, dass aus den mittels der beiden Player generierten Signalen ein drittes Signal neu errechnet werden muss. Das Verfahren benötigt dafür Prozessorkapazitäten und Speicherplatz und funktioniert nicht mit endlos vielen Playern, sondern ist einer Leistungsbegrenzung unterworfen. Das Verfahren bedarf auch stetiger Anpassung an die technischen Entwicklungen seitens verwendeter Software- und Hardwarekomponenten.

Allgemein ist auch das Streaming von Videos bekannt, wobei das Video von einem Server an den Client übertragen wird, wobei das Video bereits während der Übertragung angesehen werden kann und nicht erst nach der vollständigen Übertragung des Videos von dem Server an den Client. In der US 8,220,020 B2 ist ein solches Verfahren zum Streamen von Videos gezeigt. Ein Video wird dazu von einem Server an einen Client übertragen. Der Client weist einen Player auf, mittels welchem das Video abspielbar ist. Der Client weist des Weiteren eine Anzeige und ein Bedienelement auf, wobei das Video mittels der Anzeige einem Nutzer anzeigbar ist, wobei der Nutzer mittels des Bedienelements z.B. eine zeitliche Position des Videos, zu welcher gesprungen werden soll, in einer zusätzlichen Miniaturansicht des Videos auswählen kann.

In der US 2013 0 254 822 A1 ist ein Verfahren zum Darstellen von Videos mithilfe von Webseiten offenbart, wobei automatisch, ohne eine Eingabe eines Nutzers, mehrere Videos nacheinander abgespielt werden.

Der Erfindung liegt die Aufgabe zugrunde, das computerimplementierte Verfahren zur wahlweisen oder gleichzeitigen Anzeige zumindest zweier Videos zu verbessern, und insbesondere benutzerfreundlich auszuführen.

Diese der Erfindung zugrundeliegende Aufgabe wird nun zunächst durch ein computerimplementiertes Verfahren zur wahlweisen oder gleichzeitigen Anzeige zumindest zweier Videos mit den Merkmalen des Patentanspruchs 1 gelöst.

Das Grundprinzip der Erfindung liegt zunächst im Wesentlichen darin, dass die zumindest zwei Videos und der Multichannel Mediaplayer (MCMP) von einem Server oder von mehreren Servern an den Client übertragen werden, wobei der MCMP mittels eines des Clients eigenen Webbrowsers ausgeführt wird.

Dies hat die Vorteile, dass keine Installation von Software erforderlich ist und dass kein Image-Processing seitens eines Clienten erforderlich ist.

Mit einem Video ist im Sinne der Erfindung allgemein eine Kette von Einzelbildern gemeint, wobei die Einzelbilder entlang einer Zeitachse angeordnet sind. Die Videoformate, welche browserübergreifend standardmäßig abgespielt werden können sind: mp4 (H.264 + AAC), ogg/pgv (Theora + Vorbis) und webm (VP8 + Vorbis). Zum Beispiel ein Video, ein Video-Stream, ein Live-Stream, ein voraufgezeichnetes Kamera-Signal, ein Live-Kamera-Signal, eingefrorene Standbilder, oder auch ein 360°-Video oder ein 3D-Video. Videos werden von Webbrowsern als natives Browserelement mittels der HTML5 Funktion "Video-Tag" bereitgestellt. Videos, die zu Vergleichszwecken mittels des MCMPs abgespielt werden, haben vorzugsweise die gleiche Länge, die gleiche Auflösung, die gleiche Framerate sowie das gleiche Seitenverhältnis.

Ein Webbrowser ist auf handelsüblichen Clienten bereits installiert und muss nicht separat von einem Nutzer installiert werden. Der Webbrowser dient zur Darstellung von Webseiten im Internet. Derjenige, welcher die Videos bzw. Medieninhalte und den MCMP zur Verfügung stellt, kann somit mit hoher Sicherheit davon ausgehen, dass die Videos und der MCMP von dem Client eigenen Webbrowser ausgeführt bzw. verarbeitet werden können. Die anzuzeigenden Videos können ortsungebunden von einem Server oder von mehreren Servern aus zugespielt werden. Mittels HTTPS Protokoll erfährt der Client die URL der Videos und ruft diese mittels HTTP Request ab. Der HTTP Request stellt eine Anfrage dar, die der Client an einen verbundenen Server sendet. Der Client öffnet eine TCP-Verbindung zum Server und der Server sendet die Ressourcen zurück. Der MCMP und alle anzuzeigenden Videos stehen somit für alle Clienten an jedem Ort und zu jeder Zeit zur Verfügung.

Um die wahlweise oder gleichzeitige Anzeige zumindest zweier Videos mit jedem Clienten ohne zusätzliche Software und Hardware wie Prozessorkapazitäten und Speicherplatzbedarf lösen zu können, muss der Stand der Technik in Bezug auf die Anordnung, Synchronisation und Steuerung mehrerer Videos innerhalb eines Webbrowser-Players verbessert werden. In der Grundausführung sollen zumindest zwei Videos synchron zueinander abgespielt werden und während der Wiedergabe innerhalb des Player-Sichtfensters unterbrechungsfrei abwechselnd angezeigt werden.

Um jedes der zumindest zwei Videos abwechselnd in den Vordergrund bringen zu können, müssen die Videos innerhalb des Sichtfensters des HTML5-Players übereinander positionierbar sein. Aber die Webseite ist eine zweidimensionale Ebene und alle Elemente sind standardmäßig in Blockform nebeneinander positioniert, um im normalen Fluss einer Webseite mitzufließen.

Zur Verbesserung ändert der MCMP die Anordnung der multiplen Videoelemente hin zu "position: absolute". Ein absolut positioniertes Element muss sich in Bezug zu seinem ersten positionierten Vorfahren positionieren. Absolut positionierte Videos werden nicht länger vom normalen Fluss aus verschoben, sondern werden herausgehoben, sind unabhängig verschiebbar und können andere Elemente verdecken. Damit aktiviert der MCMP den Z-Index - ein Attribut zur Einstellung der vertikalen Position im virtuellen Raum. Mit Hilfe des Z-Index wird der vertikale Abstand zur Nullebene entlang der Z-Achse eingestellt und die zumindest zwei Videos werden in Stapelform übereinander positioniert. Die Videos befinden sich auf unterschiedlichen Ebenen in einer stapelbaren Anordnung. Die Anordnung der Videos in Ebenen bietet die Möglichkeit, die Ebenenreihenfolge jederzeit zu ändern.

Eine Besonderheit des MCMP gemäß der Erfindung ist, dass der MCMP gleichzeitig mehrere jedoch mindestens zwei separate Videos synchron verkoppeln, steuern und abspielen kann.

Die zumindest zwei Videos werden einzelbildgenau, synchron mittels des MCMPs abgespielt, d.h. die zumindest zwei Videos werden beständig bis auf die kleinste Einheit, nämlich ein Einzelbild (auch Frame genannt), genau synchronisiert abgespielt.

Es ist denkbar, dass die Synchronität während der Wiedergabe überprüft wird. Weiterhin könnte die Synchronität bei Bedarf während der Wiedergabe korrigiert werden. Bei einem sogenannten Buffern (Puffern) der Videos könnte ein synchrones Vorladen bzw. eine synchrone Zwischenladung erfolgen.

Die Übertragung der Videos an den Client erfolgt je nach Art der Quelle via Client Request mittels HTTP Request, HTTP Streaming, Live-Streaming mittels Server oder ein Verbund von Servern (Netzwerke zur Bereitstellung von Inhalten).Der Vorteil des Streamings ist, dass die Daten nicht komplett transferiert werden müssen, um sie anzuschauen. Dies spart Zeit, Speicherplatz und Kosten, wenn Videos, die nicht zu Ende geschaut werden, nicht komplett heruntergeladen werden müssen. Die Übertragung ist dadurch effizienter. Mittels Live-Streaming muss das Event noch nicht einmal komplett vorliegen. Es kann noch während der Produktion gesehen werden. Beim Streaming sind die Steuerungsmöglichkeiten mittels der Steuerungselemente innerhalb der Videos eingeschränkt.

Mithilfe eines Verbunds von Servern können besonders kurze Ladezeiten erzielt werden. Dafür sorgt die geografische Verteilung der Server, die es ermöglicht, die Inhalte von einem Server aus bereitzustellen, welcher sich in der Nähe des jeweiligen Nutzers befindet. Außerdem wird die Sicherheit der Abrufbarkeit erhöht. Es ist denkbar, dass unterschiedliche Server für unterschiedliche Inhalte verwendet werden. Das heißt ein Inhalt wird von einem ersten Server und ein anderer Inhalt wird von einem zweiten Server an den Client übertragen. Netzwerke zur Bereitstellung von Live-Inhalten können mithilfe von serverlosen Computing-Funktionen angepasst werden, um Kosten, Leistung und Sicherheit auszugleichen. Live-Inhalte sind beispielsweise Live-Recordings, Pay-TV-Anbieter, lineare Live-Kanäle, Rundfunkanstalten, Studios, Live-Veranstaltungen etc..

Das Verfahren ermöglicht, dass Benutzer Videos in Form von Aufnahmen verschiedener Kameras hochladen oder streamen, um alle Aufnahmen miteinander zusammen synchronisiert abzuspielen und ein und dasselbe Ereignis aus verschiedenen Perspektiven zu betrachten und mit anderen teilen zu können.

In einer bevorzugten Ausführungsform des Verfahrens wird zur Ausführung des MCMPs mittels des Webbrowsers ein Webrowser-Code, insbesondere ein HTML-Code, insbesondere ein HTML5-Code ausgeführt.

Der Webrowser-Code, insbesondere der HTML-CODE, insbesondere der HTML5-CODE, ist von handelsüblichen Webbrowsern problemlos ausführbar.

Vorteilhafterweise wird der MCMP in eine Webseite eingebettet. Zusätzlich oder alternativ zum HTML-Code, insbesondere zum HTML5-CODE, kann zur Ausführung des MCMPs ein Javascript, ein JQuery Code und / oder ein CSS-Code ausgeführt werden.

In einer bevorzugten Ausführungsform des Verfahrens werden in der zweiten Darstellungsart zwei deckungsgleich übereinanderliegende Videos dargestellt. Eine bewegliche Trennlinie teilt die beiden Videos voneinander, wobei auf einer ersten Seite der Trennlinie zumindest ein Teil des ersten Videos und auf einer zweiten Seite der Trennlinie zumindest ein Teil des zweiten Videos mittels der Anzeige dargestellt wird. Die Trennlinie ist in Abhängigkeit einer Eingabe des Bedienelementes in ihrer Position oder Form veränderbar. Es werden somit insbesondere beispielsweise von dem ersten Video nur ein Teil bspw. x Prozent der Ansicht dargestellt und der komplementäre, nicht dargestellte Teil des ersten Videos wird durch das zweite Video mit dem restlichen Teil von 100 weniger x Prozent dargestellt. Das Verhältnis x wird durch die Eingabe des Bedienelementes verändert. Dadurch ändert die Trennlinie ihre Position, was dazu verwendet wird, um zwischen beiden Videos zum Beispiel durch Verschiebung oder Drehung der Trennlinie einen stufenlosen Übergang einzustellen.

Der Benutzer des MCMPs kann also wie ein Profi selbst auswählen, zu welchem Teil das erste und zu welchem Teil das zweite Video dargestellt wird. So können die beiden Videos besonders übersichtlich miteinander verglichen werden. Bestehende Unterschiede der Videos lassen sich fließend nachverfolgen. Weiterhin kann der Benutzer selbst den Stil der Darstellung anpassen. Die Trennlinie ist z.B. als Gerade ausgeführt, wobei ein oberes Ende der Gerade mit einer Oberkante des ersten und des zweiten Videos übereinstimmt, wobei ein unteres Ende der Gerade mit einer Unterkante des ersten und des zweiten Videos übereinstimmt.

In einer weiteren Ausführungsform des Verfahrens kann die Trennlinie eine durchgängige oder gestrichelte Kontur unterschiedlicher Stärke und Farbe aufweisen. Anstelle einer scharfkantigen Trennlinie kann die Trennlinie in Form eines Gradienten (Verlaufes) zwischen den beiden Videos ausgeführt sein, wobei das Einstellen einer Verlaufsstärke möglich ist. Denkbar ist auch ein Übergang oder eine Überblendung in einer auswählbaren Form zum Beispiel einer Wipe-, einer Stern-, oder einer Kreisblende.

Das erste Video und das zweite Video können sich zum Beispiel nur durch Bildverbesserungen voneinander unterscheiden. Mittels der Trennlinie in der zweiten Darstellungsart und dem unterbrechungsfreien Umschalten zwischen zwei deckungsgleich übereinanderliegenden Videos in der ersten Darstellungsart kann an jeder Stelle einer Zeitachse des Videos der Verbesserungseffekt zwischen dem ersten Video und dem zweiten Video besonders leicht von dem Benutzer erkannt werden. So wäre denkbar, dass ein Colorist das erste und das zweite Video einem Kunden mittels des MCMPs zur Verfügung stellt, wobei sich das erste und das zweite Video lediglich bezüglich der Farben voneinander unterscheiden, wobei der Kunde wählen kann, ob er die Trennlinie während des Abspielvorgangs des Videos verschiebt oder er das Video pausiert und dann verschiebt. Der Kunde entscheidet sich Dank der professionellen Ansichtsmöglichkeiten für die Farben seiner Wahl und ist dabei zeitlich flexibel und ortsungebunden bei besonders geringem Aufwand. Eine Chatfunktion ermöglicht das Hinterlassen von Kommentaren und Anweisungen seitens des Kunden / Empfängers und Beantworten und Rückfragen seitens des Coloristen / Absenders.

Um in beiden Videos auch kleine Details besser miteinander vergleichen zu können, besteht die Möglichkeit, dass die Ansicht der Videos in Abhängigkeit einer Eingabe des Bedienelementes gleichzeitig oder einzeln verlustfrei zoombar und / oder skalierbar ist.

Bevorzugterweise wird zur Ausbildung einer dritten, Bild-in-Bild Darstellungsart zumindest das erste Video gegenüber dem zweiten Video überlagert angezeigt. Das erste Video ist gegenüber dem zweiten Video insbesondere verkleinert dargestellt.

Mittels dieser Darstellung lassen sich Bearbeitungsfehler schnell identifizieren. Beide Videos sind nach wie vor synchron abspielbar. Ist es bei einer vorausgegangenen Bearbeitung der Videos zu Synchronfehlern oder Fehlbildern gekommen, erkennt man das anhand dieser Darstellungsform besonders leicht. So ist die Genauigkeit der Videoanalyse weiter erhöht und die Kontrollmöglichkeit für den Benutzer des MCMPs ist verbessert.

Durch die Verwendung einer absoluten Position werden die Videos in Stapelform positionierbar, was eine vertikale Anordnung ist.

In einer bevorzugten Ausführungsform des Verfahrens wird das erste Video mittels des MCMPs virtuell in einer ersten Ebene, insbesondere an einer bestimmten, absoluten Position, geladen und abgespielt. Das zweite Video wird mittels des MCMPs virtuell in einer zweiten Ebene, insbesondere an einer bestimmten, absoluten Position, geladen und synchron zum ersten Video abgespielt. Die erste und die zweite Ebene sind zueinander parallel ausgerichtet. Beide Videos liegen auf unterschiedlichen Ebenen in Kongruenz deckungsgleich übereinander. Welches Video auf der Anzeige des MCMPs dargestellt wird, erfolgt nun in Abhängigkeit von einem mittels des MCMPs der ersten Ebene zugewiesen ersten Attributes und / oder in Abhängigkeit von einem mittels des MCMPs der zweiten Ebene zugewiesen zweiten Attributes.

Das erste und das zweite Attribut sind vorzugsweise als Index ausgeführt, wobei prioritär das in der Ebene höheren Indexes angeordnete Video (1 oder 2) auf der Anzeige dargestellt wird. Das Attribut wird durch die Position entlang der Z-Achse den sogenannten Z-Index gebildet. Elemente bzw. Videos mit einem größeren Z-Index sind oben und daher näher am Betrachter. Welches Video auf der Anzeige dargestellt wird, erfolgt nun in Abhängigkeit von dem mittels des MCMPs für Ebene 1 und 2 zugewiesenen Z-Indexes.

So ist das unterbrechungsfreie Umschalten von dem ersten Video zu dem zweiten Video oder umgekehrt besonders einfach umsetzbar. Es muss lediglich das erste Attribut der ersten Ebene und / oder das zweite Attribut der zweiten Ebene entsprechend zugewiesen werden.

Auf die Art lassen sich auch drei, vier und x-mehr Videos innerhalb eines Stapels komfortabel hin- und herschalten.

Bevorzugterweise ist ein sogenannter "Vorlader" für Videos vorhanden, welcher das nächste Video an eine momentan passive Position vorlädt, um beim nächsten Umschalten von einer aktiven Position (z.B. A) auf eine passive Position (z.B. B) zu erscheinen.

Zusätzlich ist beiden Ebenen ein weiteres Attribut, nämlich eine Deckkraft zuweisbar. Bei einer Deckkraft von 1 ist das zugehörige Video zu 100% sichtbar. Bei einer Deckkraft von 0 ist das zugehörige Video zu 0% sichtbar. Die Deckkraft stellt somit einen weiteren Parameter für die Anzeige der beiden Videos dar. Um nur eines der beiden Videos darzustellen, wird der Ebene des darzustellenden Videos die Deckkraft von 1 und der Ebene des nicht darzustellenden Videos die Deckkraft von 0 zugewiesen, wobei in diesem Fall der Index der Ebenen keine Rolle spielt.

Weiterhin sind Darstellungsarten ausführbar, bei welchen für die Anzeige der Videoebenen eine Kombination der Indizes für die Anordnung der Stapelform und der Deckkräfte genutzt werden.

Mittels eines als Überblendregler ausgeführten Steuerungselementes kann dann zwischen einem oberen Video, nämlich einem in der Ebene höheren Indexes angeordneten Videos, auf ein unteres Video, nämlich ein in der Ebene niedrigeren Indexes angeordneten Videos, überblendet werden, indem die Deckkraft des in Stapelform weiter oben liegenden Videos auf Null herunter geregelt wird, während die Deckkraft des in Stapelform niedrigeren Videos einen Wert von 1 aufweist oder zugewiesen bekommt.

In der zweiten Darstellungsart, in welcher zwischen dem ersten und dem zweiten Video eine Trennlinie mit einer Teilung dargestellt wird, befinden sich die zumindest zwei Videos ebenfalls virtuell in Stapelform deckungsgleich parallel übereinander. Anstelle zwischen dem ersten und dem zweiten Video unterbrechungsfrei umzuschalten, wird zumindest ein Teil des in der Ebene höheren Indexes angeordneten Videos freigestellt.

Ein erster, freigestellter Teil zumindest eines der Videos wird dargestellt, wobei ein zweiter Teil des zumindest einen Videos nicht dargestellt wird. Innerhalb des freigestellten Teils ist das in der Ebene niedrigeren Indexes angeordnete Video sichtbar. Anhand eines Bedienelementes erfolgt das Ausmaß der Freistellung und die damit erfolgende Teilung von 0 bis 100 Prozent stufenlos. Auf diese Art und Weise lassen sich mit dem MCMP auch drei und mehr Videos miteinander vergleichen. Wurde das Video der Ebene des höchsten Indexes zumindest teilweise freigestellt, so ist das Video mit dem nächst-niedrigeren Ebenen-Index in dem freigestellten Teil sichtbar, bis dieses Video in diesem Teil ebenfalls freigestellt wird und so weiter bis schließlich das Video mit dem niedrigsten Ebenen-Index sichtbar wird. So lassen sich ganze Schichten von Videoebenen komfortabel innerhalb des MCMPs einbetten und synchron abspielen. Pro Video lässt sich dafür eine weitere Trennlinie einblenden und innerhalb der Anzeige des MCMPs verschieben. Die Zuordnung der Trennlinien erfolgt in Bezug zu der Ebenenreihenfolge. Die (erste) Trennlinie deckt die zweite Ebene auf, eine zweite Trennlinie deckt eine dritte Ebene auf und eine dritte Trennlinie deckt eine vierte Ebene auf. So kann man wie beim Umblättern eines Buches alle nachfolgenden Videos "durchblättern". Das Video auf der ersten Ebene kann in der Standardansicht zum Beispiel bereits zur Hälfte aufgezogen sein. Die (erste) Trennlinie ist also zum Beispiel in der Mitte angeordnet. Links von der Mitte ist das freigestellte zweite Video sichtbar.

Es müssen aber nicht alle Ebenen nacheinander freigestellt werden. Ist nur die erste Ebene zur Hälfte freigestellt und soll beispielsweise das Video von der ersten Ebene mit dem Video der vierten Ebene verglichen werden, so kann mittels eines Trennlinien-Auswahlschalters für die anzuzeigenden Ebenen, welche mittels eines Ebenen-Auswahlschalters auswählbar sind, sofort die entsprechende, in dem Fall dritte Trennlinie angefasst und aufgezogen werden. Somit werden alle Videos der ersten, zweiten und dritten Ebene gleichzeitig freigestellt und das vierte Video wird sichtbar. Dadurch lassen sich Zwischenebenen überspringen. Wenn zum Beispiel aufgrund begrenzter Anzeigefläche des Clients die Darstellung von multiplen Trennlinien (Multi-Slider) innerhalb einer Anzeige des MCMPs zu unübersichtlich wird, trifft man eine Vorauswahl für die zu vergleichenden Ebenen mittels des beschriebenen "Vorladers". Dann wird die Anordnung der Ebenen in der Stapelform so geschaltet, dass aus einer Mehrzahl von Ebenen die gewünschten zu einem 2er Paar aktiviert und mittels nur einer Trennlinie verglichen werden können.

Der MCMP kann mehrere übereinanderliegende Videos synchron abspielen und währenddessen freistellen. Werbeagenturen bieten Ihren Kunden oft verschiedene Looks eines Films bzw. Videos für eine Kampagne an. Der MCMP bietet eine komfortable Vergleichsmöglichkeit, verschiedene Looks eines Filmes bzw. Videos zu jedem Zeitpunkt des Films bzw. Videos miteinander zu vergleichen.

In einer anderen Ausführungsform des MCMPs können alle Videos vollständig nebeneinander in einer sogenannten Multiview-Ansicht mittels der Anzeige angezeigt werden. Die mögliche Anzahl der flüssig laufenden und synchronisierbaren Videos wird von der vorhandenen Internetbandbreite limitiert. Mehrere Videos können zu Gruppen gekoppelt werden und mehrere Gruppen können zu Multigruppen kombiniert werden.

Die Steuerelemente für die Bewegung und Anzeige lassen sich dabei auf einzelne Videos, Gruppen oder Multigruppen separat sowie auch für alle gleichzeitig anwenden.

Es ist denkbar, dass die Videos nicht auf ein vorgegebenes Raster fixiert sind, sondern in Position, Größe und Form vom Anwender innerhalb des Sichtfensters (Viewports) des Players veränderbar sind.

Es können bevorzugt mittels auf Server- und / oder Cloudbasiertem Image-Processing Bildverbesserungseffekte und Filter für die Videobearbeitung via WEB-API zur Verfügung gestellt werden, welche auf zumindest einem Video bzw. einem Videokanal angewandt werden. Die Bildverbesserungseffekte und Filter funktionieren automatisiert oder sind manuell einstellbar. Das mittels Image Processing bearbeitete Video wird als Stream oder Download abgreifbar bereitgestellt. Drittanbieter können Effekte und Filter mittels API zur Verfügung stellen.

Bildverbesserungseffekte sind u. a. Beautyfilter, (Echtzeit)-Bild-Analyse-Modul und / oder ein (Echtzeit)-Farbkorrektur-Modul zur Autokorrektur von Farb- und Helligkeitsunterschieden.

Je nach Anwendungsbereich können auch Videoinhalte, wie z.B. Produkte, Worte, Links herausgefiltert und weiterverarbeitbar dargeboten werden. Diese und weitere mögliche Module müssen keine Eigenentwicklungen sein, sondern können von anderen Anbietern zur Verfügung gestellt werden, und z.B. mit einer API an den MCMP angebunden sein. Das Verfahren arbeitet vorzugsweise sowohl mit voraufgezeichneten Videos als auch mit Echtzeit Video- Streams. Es ist vorteilhaft, wenn auch die Metadaten der Videos, wie zum Beispiel Dateiname, Herstellungsdatum, Herstellungsort, Eigentümer, Nutzungsrechte etc. gelesen und verarbeitet werden können. Diese können bei der Betrachtung und Analyse der Videos nützliche Informationen liefern.

Bei Bedarf sind die Datenübertragungsraten der Videoströme reduzierbar, um sich der verfügbaren Internetbandbreite anzupassen. Aus diesem Grunde sind auch einzelne Videos/Gruppen/Multigruppen abschaltbar.

Vorteilhafterweise ist das Bedienelement als Maus und / oder als Stift und / oder als Touchscreen, insbesondere eines Tablets, und / oder als Tastatur und / oder als Controller und / oder als Joystick ausgeführt. Ein Controller beinhaltet Tasten Drehknöpfe und Fader bzw. Schieberegler und bietet so eine schnellere Steuerungsmöglichkeit und ermöglicht noch professionelleres Arbeiten, wo die Auswertung so exakt wie möglich erfolgen muss.

Weiterhin ermöglichen die verschiedenen Bedienelemente den Einsatz des MCMPs auf unterschiedlich ausgeführten Clients. So könnte der Client als Desktop-PC, als Smartphone, als Tablet usw. ausgeführt sein. Obwohl die Hauptausführung des MCMPs ein HTML5-Webrowser ist, gibt es darüber hinaus keine Beschränkung auf eine bestimmte Host-Plattform.

Es gibt nun eine Vielzahl von Möglichkeiten, das erfindungsgemäße Verfahren zur wahlweisen oder gleichzeitigen Anzeige zumindest zweier Videos in vorteilhafter Art und Weise auszugestalten und weiterzubilden. Es darf hierzu zunächst auf die dem Patentanspruch 1 nachgeordneten Patentansprüche verwiesen werden. Im Folgenden wird nun eine bevorzugte Ausgestaltung des erfindungsgemäßen Verfahrens zur wahlweisen oder gleichzeitigen Anzeige zumindest zweier Videos anhand der Zeichnung und der dazugehörigen Beschreibung näher erläutert bzw. beschrieben. In der Zeichnung zeigt:
- Fig.1: in stark schematischer Darstellung das erfindungsgemäße Verfahren zur wahlweisen oder gleichzeitigen Anzeige zumindest zweier Videos,
- Fig.2: in schematischer Darstellung eine graphische Benutzeroberfläche eines ersten Ausführungsbeispiels eines MCMPs mit einer aktivierten ersten Darstellungsart,
- Fig.2.1: in schematischer Darstellung eine graphische Benutzeroberfläche des ersten Ausführungsbeispiels eines MCMPs mit einer aktivierten ersten Darstellungsart, mit einem Fokus auf einem Ebenen-Auswahlschalter
- Fig.3: in schematischer Darstellung eine graphische Benutzeroberfläche des ersten Ausführungsbeispiels des MCMPs mit einer aktivierten zweiten Darstellungsart mit einer Teilung,
- Fig.3.5: in schematischer Darstellung eine graphische Benutzeroberfläche des ersten Ausführungsbeispiels des MCMPs mit einer aktivierten, erweiterten zweiten Darstellungsart mit einer Teilung mit einer wahlweisen oder gleichzeitigen Anzeige von vier und mehr Videos,
- Fig.3.6: in schematischer Darstellung eine graphische Benutzeroberfläche des ersten Ausführungsbeispiels des MCMPs mit einer aktivierten, erweiterten zweiten Darstellungsart mit einer Teilung mit einer wahlweisen oder gleichzeitigen Anzeige von vier und mehr Videos, mit einem Fokus auf einem Trennlinien-Auswahlschalter,
- Fig.3.7: in schematischer Darstellung eine graphische Benutzeroberfläche des ersten Ausführungsbeispiels des MCMPs mit einer aktivierten, erweiterten zweiten Darstellungsart mit einer Teilung mit einer wahlweisen oder gleichzeitigen Anzeige von vier und mehr Videos, mit einem Fokus auf "verheirateten" Trennlinien,
- Fig.4: in schematischer Darstellung eine graphische Benutzeroberfläche des ersten Ausführungsbeispiels des MCMPs mit einer aktivierten zweiten Darstellungsart ohne eine Teilung,
- Fig.5: in schematischer Darstellung eine graphische Benutzeroberfläche des ersten Ausführungsbeispiels des MCMPs mit einer aktivierten dritten Darstellungsart,
- Fig.6: in schematischer Darstellung eine graphische Benutzeroberfläche eines zweiten Ausführungsbeispiels des MCMPs mit einer aktivierten zweiten Darstellungsart,
- Fig.7: in schematischer Darstellung eine graphische Benutzeroberfläche des zweiten Ausführungsbeispiels des MCMPs mit einer aktivierten ersten Darstellungsart, und
- Fig.8: in schematischer Darstellung eine virtuelle Anordnung von zwei Videos mittels des MCMPs.

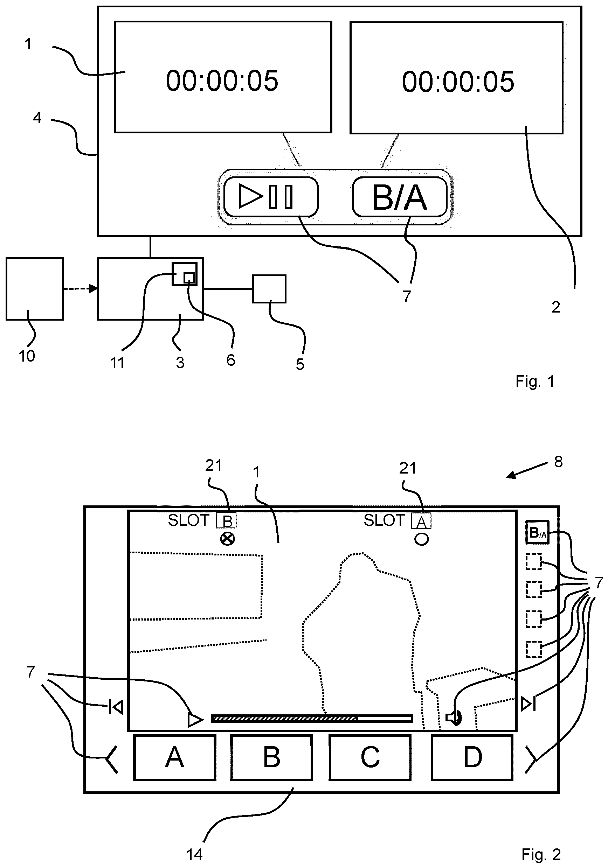

Das computerimplementierte Verfahren dient der wahlweisen oder gleichzeitigen Anzeige bzw. Ansicht zumindest zweier Videos 1, 2. Ein Client 3 weist dazu zumindest eine Anzeige 4 und ein Bedienelement 5 auf. Die zumindest zwei Videos 1, 2 werden synchron mittels eines Mehrkanal-Mediaplayers (Multichannel-Mediaplayer, MCMP) 6 abgespielt. Fig.1 zeigt in stark schematischer Darstellung das erfindungsgemäße Verfahren zur wahlweisen oder gleichzeitigen Anzeige zumindest zweier Videos 1, 2. Beide Videos 1, 2 werden synchron durch gemeinsame Steuerungselemente 7 gesteuert, so dass die beiden Videos 1, 2 gemeinsam gestartet, wiedergegeben oder pausiert werden, ohne sich auf diese Steuerungsmöglichkeiten zu beschränken. So ist auch eine Rückwärtswidergabe, sowie ein Suchvorlauf / -rücklauf, eine Zeitlupe, ein Zeitraffer, ein Vor- und Zurückschalten von Einzelbildern, ein Vor- und Zurückschalten von z.B. 10 Frames, eine Loop-Widergabe, eine Fullscreen-Einstellung, ein Snapshot, ein Resync, das Öffnen einer Hilfe usw. möglich.

Die Synchronität wird durch die Zeitangabe, welche für beide Videos 1, 2 gleiche Werte aufweist, symbolisiert. Die Steuerungselemente 7 werden mittels des MCMPs 6 bereitgestellt. Fig. 1 zeigt hier ein Steuerungselement 7 zum Starten und Pausieren der Videos 1, 2 mit entsprechenden Symbolen. Die Steuerungselemente 7 sind mittels des Bedienelementes 5 von einem Benutzer bedienbar. Zumindest zwei Darstellungsarten 8, 9 der beiden Videos 1, 2 werden mittels des MCMPs 6 bereitgestellt.

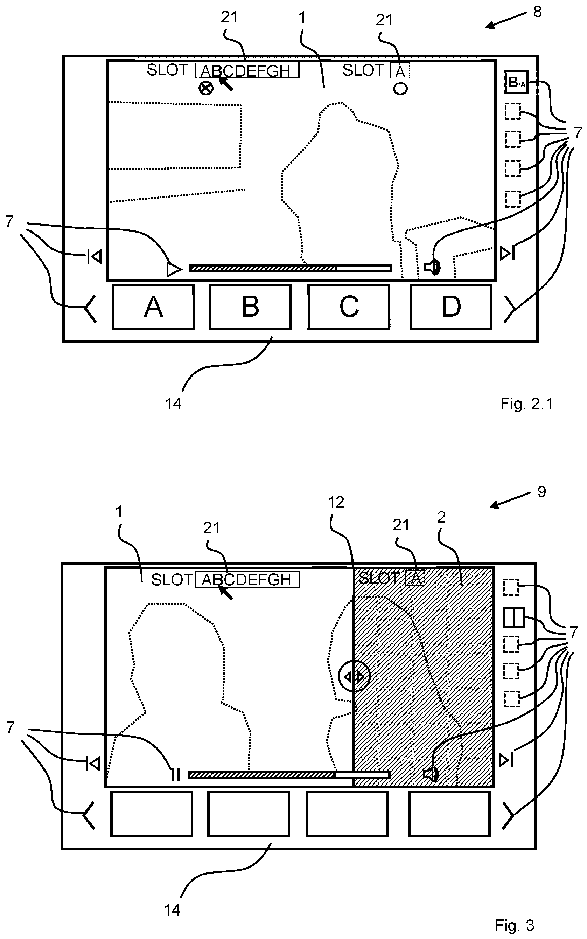

In einer ersten Darstellungsart 8 wird lediglich eines der zumindest zwei Videos 1, 2 mittels der Anzeige 4, insbesondere in einer Einzelbildansicht, dargestellt. Fig.2 zeigt in schematischer Darstellung eine graphische Benutzeroberfläche eines ersten Ausführungsbeispiels des MCMPs 6 mit einer aktivierten ersten Darstellungsart 8. In Fig. 2 ist ein erstes Video 1 in der Einzelbildansicht dargestellt.

Bei einem Umschalten des mittels der Anzeige 4 dargestellten Videos 1 oder 2 in der ersten Darstellungsart 8 von dem ersten Video 1 zu einem zweiten Video 2 oder umgekehrt erfolgt der Wechsel unterbrechungsfrei und nahtlos synchron sowohl bei der Wiedergabe als auch bei der Pausierung des Videos. Fig. 1 und Fig. 2 zeigen jeweils ein Steuerungselement 7 zum Umschalten der Videos 1, 2 mit dem entsprechenden Symbol B/A (Before/After). In Fig. 2 wird durch ein Kreuz angezeigt, dass gerade das erste Video 1, hier mit B bezeichnet, dargestellt wird. Der dem Buchstaben A zugeordnete Kreis bleibt leer, womit symbolisiert wird, dass das zweite Video 2 gerade nicht dargestellt wird. Anstelle des Kreuzes könnte auch mittels eines Roten Punkt symbolisiert werden, ob gerade Video 1 oder Video 2 dargestellt wird.

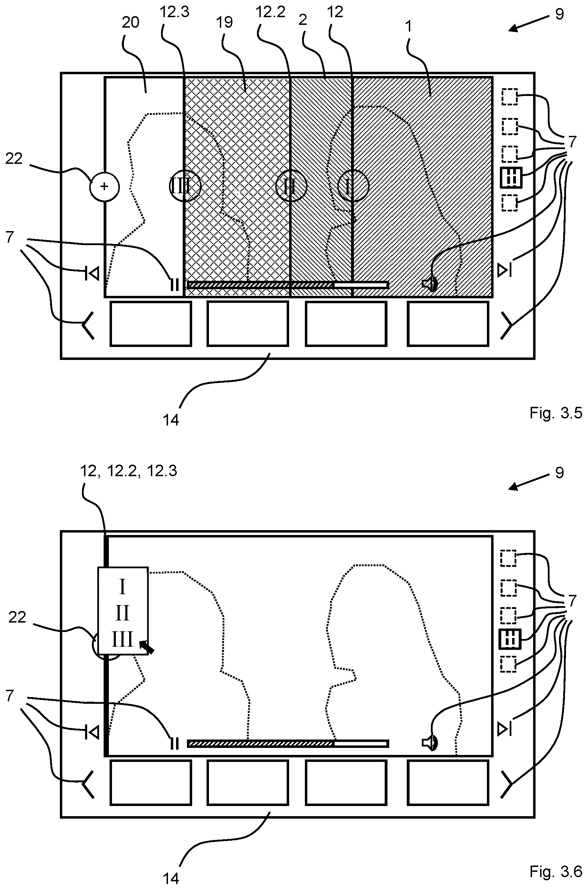

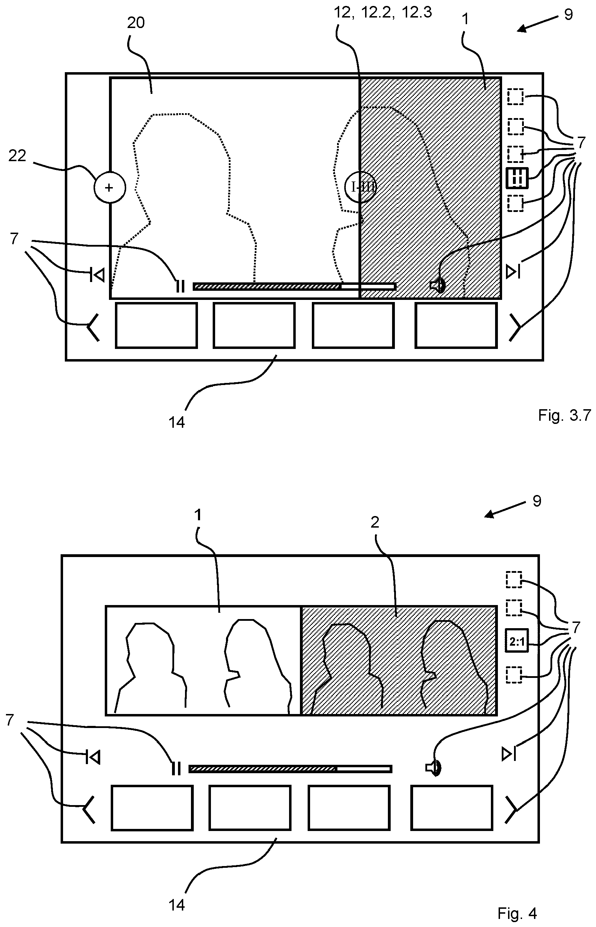

In einer zweiten Darstellungsart 9 werden zumindest zwei der Videos 1, 2 zumindest teilweise nebeneinander dargestellt. Fig. 3 und Fig. 4 zeigen in schematischer Darstellung eine graphische Benutzeroberfläche des ersten Ausführungsbeispiels des MCMPs 6 mit einer aktivierten zweiten Darstellungsart 9. Die entsprechende Darstellungsart wird mittels des zugehörigen Steuerungselements 7 ausgewählt und aktiviert. Die Steuerungselemente 7 zur Auswahl der Darstellungsart 8, 9 werden rechts neben dem ersten Video 1 und / oder dem zweiten Video 2 angezeigt.

Die zumindest zwei Videos 1, 2 und der MCMP 6 werden von einem Server 10 oder von mehreren Servern 10 an den Client 3 übertragen. Der MCMP 6 wird mittels eines Webbrowsers 11 ausgeführt. Der Webbrowser 11 ist auf dem Client 3 installiert und wird mittels des Clients 3 ausgeführt. Der MCMP ist insbesondere in eine Webseite eingebettet, wobei diese Webseite mittels des Webbrowsers 11 ausgeführt wird. Die zumindest zwei Videos 1, 2 werden von dem einem Server 10 oder von den mehreren Servern 10 durch z.B. Streaming an den Client 3 übertragen. Alternativ werden die Videos 1 und 2 vom Client 3 auf einen Server 10 oder auf mehreren Servern 10, insbesondere in den MCMP 6, hochgeladen / upgeloadet, um dort im MCMP 6 in zumindest zwei verschiedenen Darstellungsarten der Multichannel-Mediaplayer-Ansichten betrachtet werden zu können. Möglich ist auch das Versenden von Einladungen an zum Beispiel seine Kunden zur Anschauung der zuvor hochgeladenen Videopaare in verschiedenen Ansichten. In diesem Falle ist denkbar, dass zumindest eines der Videos 1, 2 zuvor vom Client 3 auf einen Server 10 oder auf die mehreren Servern 10, insbesondere in den MCMP 6, hochgeladen / upgeloadet wird.

Zur Ausführung des MCMPs 6 mittels des Webbrowsers 11 wird ein Webbrowser-Code, insbesondere ein HTML-Code, insbesondere ein HTML5-Code ausgeführt. Mittels des Webbrowser-Codes, insbesondere HTML-Codes, insbesondere mittels des HTML5-Codes, sind theoretisch MP4 Videos 1, 2 in allen Auflösungen, Frameraten, Seitenverhältnissen, Clip-Längen, Bitraten und Dateigrößen verarbeitbar und abspielbar. Um eine sinnvolle Nutzung des MCMPs im Internet in der Praxis zu gewährleisten, sollten technische Richtlinien beachtet werden.

In der zweiten Darstellungsart 9 wird optional zwischen dem ersten Video 1 und dem zweiten Video 2 eine Teilung durchgeführt. Die Teilung zwischen dem ersten Video 1 und dem zweiten Video 2 ist in Fig. 3 dargestellt. Eine Trennlinie 12 ist zwischen dem ersten Video 1 und dem zweiten Video 2 ausgebildet. Auf einer ersten, hier links dargestellten Seite der Trennlinie 12 wird zumindest ein Teil des ersten Video 1 und auf einer zweiten, hier rechts dargestellten Seite der Trennlinie 12 wird zumindest ein Teil des zweiten Videos 2 mittels der Anzeige 4 dargestellt. Die Trennlinie 12 ist in Abhängigkeit einer Eingabe des Bedienelementes 5 auch während der synchronen Wiedergabe der Videos 1, 2 in ihrer Position oder Form veränderbar, welches dem Benutzer mittels eines auf der Trennlinie befindlichen Anfassers 22 symbolisiert wird.

Die Trennlinie muss nicht als Gerade ausgeführt sein und kann auch einen einstellbaren Verlauf oder eine einstellbare Kontur aufweisen oder entlang einer einstellbaren Form verlaufen, welche mittels CSS Clip-Paths und Maks einstellbar ist. Möglich sind neben grafischen Grundformen auch skalierbare Vektorgrafiken (SVG). Möglich ist auch eine Animation von einer Form hin zu einer anderen Form z.B. unter Verwendung von vielen Zwischenformen.

In Fig. 3 ist jeweils nur ein Teil des ersten Videos 1 und ein Teil des zweiten Videos 2 nebeneinander dargestellt. Im Extremfall, nämlich wenn die Trennlinie 12 ganz nach links oder ganz rechts verschoben ist, ist auch in der Variante des MCMP 6 aus Fig. 3 nur eines der beiden Videos 1 oder 2 sichtbar. Fig. 4 zeigt beide Videos 1, 2 komplett und nebeneinander. Die mit gestrichelten Linien dargestellten Personen in Fig. 3 und die mit durchgezogenen Linien in Fig. 4 dargestellten Personen aus den beiden Videos 1, 2 symbolisieren diesen Umstand.

Fig. 3.5, Fig. 3.6 und Fig. 3.7 zeigen in einer erweiterten, zweiten Darstellungsart 9 eine Ansicht für mehr als zwei Videos, nämlich für vier Videos, welche zum Beispiel ein und das gleiche Ereignis zu unterschiedlichen Zeitpunkten oder an unterschiedlichen Standpunkten wiedergeben. So lassen sich die Videos schichtweise aufdecken und alle Videos lassen sich miteinander vergleichen.

In Fig. 3.5 sind zusätzlich zu dem ersten Video 1 und dem zweiten Video 2 ein drittes Video 19 und ein viertes Video 20 dargestellt. Dazu weist der MCMP 6 zwei weitere Trennlinien zusätzlich zur Trennlinie 12, nämlich eine zweite Trennlinie 12.2 und eine dritte Trennlinie 12.3 auf. Angrenzend zu den Trennlinien 12, 12.2 und 12. 3 wird eine der jeweiligen Trennlinie 12, 12.2 oder 12. 3 zugeordnete Zahl dargestellt, hier beispielhaft als römische Zahl. Es wäre auch denkbar lateinische Zahlen zu verwenden.

Fig. 3.6 ist zurzeit nur ein Video auf der Anzeige dargestellt. Der Benutzer kann mittels eines angrenzend zu den übereinander dargestellten mehreren Trennlinien 12, 12.2 und 12.3 angeordneten Trennlinien-Auswahlschalters 22 auswählen, welche der Trennlinien 12, 12.2 oder 12.3 er verschieben möchte. Die entsprechend zugehörigen Videos werden dann angrenzend zur Trennlinie 12, 12.2 oder 12.3 entsprechend freigestellt. Mittels des Trennlinien-Auswahlschalters 22 können alle übrigen Trennlinien aufgezogen werden, was durch das "+" Zeichen symbolisiert wird.

In Fig. 3.7 wird das erste Video 1 und das vierte Video 20 dargestellt. Die Trennlinie 12.3 verschiebt synchron mit sich auch die Trennlinien 12 und 12.2. Um dies zu symbolisieren ist die Trennlinie 12.3 mit den römischen Ziffern "I - III" als "verheiratete" Trennlinie beschriftet.

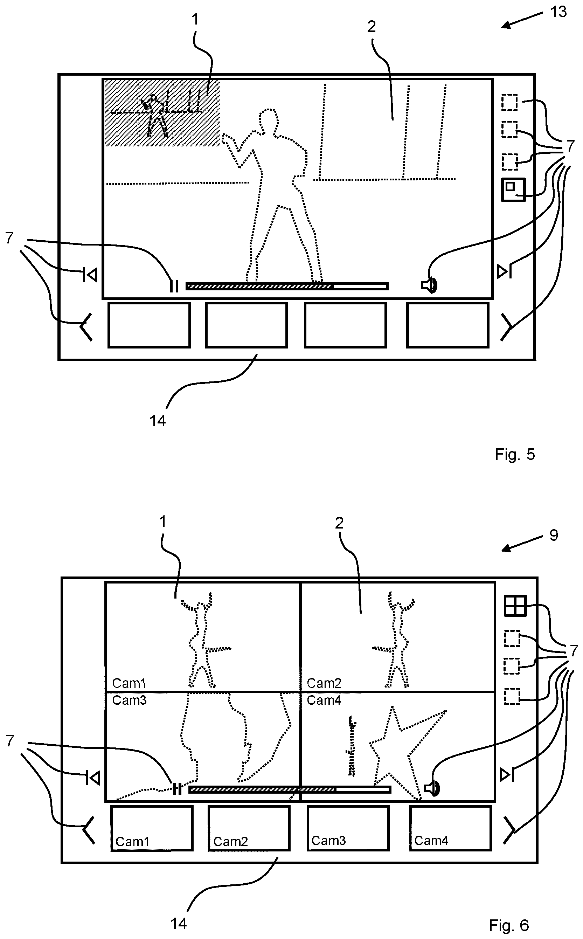

In Fig. 5 ist in schematischer Darstellung eine graphische Benutzeroberfläche des ersten Ausführungsbeispiels des MCMPs 6 mit einer aktivierten dritten Darstellungsart 13 dargestellt. Zur Ausbildung dieser dritten, Bild-in-Bild Darstellungsart 13 wird zumindest das erste Video 1 gegenüber dem zweiten Video 2 überlagert angezeigt. Diese dritte, Bild-in-Bild Darstellungsart 13 ist mittels eines zugehörigen Steuerungselements 7 von einem Benutzer auswählbar. Das erste Video 1 wird bei dieser dritten, Bild-in-Bild Darstellungsart 13 kleiner als das zweite Video 2 dargestellt und dem zweiten Video 2 überlagert dargestellt. Die Position und Größe des Video 1 sind in einer erweiterten Ausführungsform des MCMPs frei einstellbar. Die Videos 1 und 2 können im Bild-in-Bild Modus gewechselt werden. Die Videos 1 und 2 können mittels Tastendrucks auf einen Button ihre Positionen austauschen, so dass Video 2 kleiner ist und das Video 1 überlagert. Bild-in-Bild kann wie bei allen Modis in Echtzeit, also während der Wiedergabe ein- und ausgeschaltet werden. Die Wiedergabe aller Videos wird dabei unterbrechungsfrei und synchron fortgesetzt. Das der gerade aktiven Darstellungsart 8, 9, 13 zugehörige Steuerungselement 7 wird, wie aus den Figuren 2, 3, 4 und 5 ersichtlich, hervorgehoben mittels des MCMPs 6 dargestellt. Das der gerade aktiven Darstellungsart 8, 9, 13 zugehörige Steuerungselement 7 wird größer und mit dickeren Linien als die inaktiven Steuerungselemente 7 dargestellt. So wird die Bedienung des MCMPs 6 für den Benutzer erleichtert.

An einem unteren Rand der graphischen Benutzeroberfläche des MCMPs 6 sind in einer Miniaturansicht 14 mehrere Auswahlmöglichkeiten dargestellt. Jede Auswahlmöglichkeit stellt ein einzelnes Video in Miniaturansicht 14 dar, welches an der Stelle ausgewählt und damit für die jeweilige Ausführungsform und Darstellungsart des MCMPs aktiviert werden kann.

Eine weitere Ausführungsmöglichkeit sieht vor, dass die Miniaturansichten andere Videostapel darstellen, nämlich zumindest ein zugehöriges erstes Video 1 und ein zugehöriges zweites Video 2. Durch eine Auswahl einer der Auswahlmöglichkeiten wird z.B. ein weiteres zuvor an den MCMP Player überspieltes Videopaar angezeigt. Die zugehören zwei Videos, nämlich das zugehörige erste Video 1 und das zugehörige zweite Video 2 werden synchron mittels des MCMPs 6 abgespielt.

Weiterhin kann mittels eines Ebenen-Auswahlschalters 21 ausgewählt werden, welches der Videos als erstes Video 1 und welches der Videos als zweites Video 2 ausgeführt wird. Mittels der Anzeige 4 wird zur Symbolisierung dieser Auswahlmöglichkeit jeweils in dem ersten Video 1 und dem zweiten Video 2 der Schriftzug "SLOT" neben dem jeweiligen Ebenen-Auswahlschalter 21 dargestellt.

Der MCMP 6 bietet dem Benutzer die Möglichkeit, selber Videos auf den Server zur Betrachtung mit dem MCMP 6 zu laden und zwar unabhängig davon, welche Darstellungsansicht er am MCMP 6 auswählt. Außerdem erhält der Benutzer die Möglichkeit, den mit Benutzervideos geladenen MCMP 6 mit anderen Personen zu teilen, welche ihre Kommentare und Anweisungen in den MCMP 6 schreiben können. Es ist denkbar, dass diese Kommentare auf der Zeitachse des Players indiziert werden, so dass sie auf der Zeitachse ansteuerbar sind. Weitere Werkzeuge der Zusammenarbeit sind möglich.

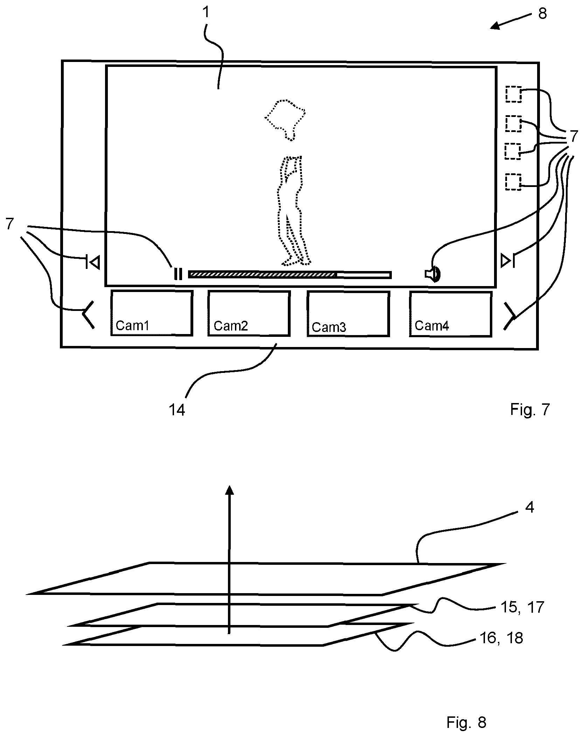

Fig. 6 und Fig. 7 zeigen in schematischer Darstellung eine graphische Benutzeroberfläche eines zweiten Ausführungsbeispiels des MCMPs 6, in Fig. 6 mit einer aktivierten zweiten Darstellungsart 9 und in Fig. 7 mit einer aktivierten ersten Darstellungsart 8. Das in den vorangehenden Figuren dargestellte erste Ausführungsbeispiel des MCMPs 6 dient insbesondere dem Vergleich zweier Videos insbesondere nach dessen Bearbeitung also z.B. nach dem Colorgrading oder nach einer Videoeffektbearbeitung. Es sind aber auch unbearbeitete Videos von einer Überwachungskamera, oder Zeitrafferaufnahmen ein- und des gleichen Motivs oder Lehrmaterial z.B. einer medizinischen Untersuchung etc. miteinander vergleichbar. Das zweite Ausführungsbeispiel des MCMPs 6 ist insbesondere für die voraufgezeichnete Widergabe oder für eine Live-Übertragung eines Events mit mehreren Kameras gedacht. Es können natürlich auch andere Inhalte wie verschiedene Programm(-kanäl)e oder vom Benutzer hochgeladene Videos wiedergegeben werden. Ebenso können andere Inhalte wie Fotos, Lehrfolien, Grafiken, Animationen und vieles mehr angezeigt werden, wenn dadurch zusätzliche Inhalte vermittelt werden können. Es können aber auch Alternativangebote wie andere Handlungsstränge bei Filmen oder andere Landessprachen übertragen und angezeigt werden. In Fig. 6 sind dabei zusätzlich zum ersten Video 1 und zum zweiten Video 2 zwei weitere Videos mittels des MCMPs 6 und der Anzeige 4 nebeneinander dargestellt. Jedes dieser vier Videos zeigt dieselbe Situation aber aus einem anderen Kamerawinkel. Der Benutzer kann nun, z.B. während der Live-Übertragung oder der Widergabe selbst wählen, ob alle vier Videos nebeneinander dargestellt werden sollen oder ob, wie in Fig. 7 gezeigt, nur ein Video dargestellt werden soll. Mittels des Bedienelementes 5 ist dann ebenso auswählbar, welches der Vielzahl von Videos dieses eine dargestellte Video sein soll. Diese Vielzahl von Videos ist in einer Miniaturansicht 14 an einem unteren Rand der graphische Benutzeroberfläche des MCMPs 6 dargestellt. Die Miniaturansicht 14 könnte auch alternativ und / oder zusätzlich an einem oberen Rand der graphische Benutzeroberfläche des MCMPs 6 dargestellt sein. Die als Pfeile ausgeführten Bedienelemente 7 links und rechts der Miniaturansicht 14 weisen darauf hin, dass neben den 4 Videos weitere Videos eingeblendet werden können, falls diese zur Verfügung stehen. Das erste und das zweite Ausführungsbeispiel des MCMPs 6 unterscheiden sich somit dadurch, dass in dem ersten Ausführungsbeispiel hauptsächlich Videos miteinander verglichen werden, während in dem zweiten Ausführungsbeispiel hauptsächlich gestreamte Inhalte betrachtet werden. Selbstverständlich ist denkbar mehr als 4, z.B. 9, 12, 16 Videos synchron mittels des MCMPs 6 abzuspielen. Technische Grenzen sind hier lediglich durch die Datenrate der zwischen dem Server 10 und dem Client 3 zu übertragenen Daten und der zur Verfügung stehenden Internet-Übertragungsrate gesetzt.

Das abwechselnde Umschalten zwischen den Videos 1, 2 mittels eines Schalters lässt den Benutzer deutlich die Unterschiede und Gemeinsamkeiten beider Videos 1, 2 erkennen. Im Folgenden wird erläutert, wie die Videos 1, 2 während Ihrer synchronen Wiedergabe umgeschaltet werden, ohne dass der Bildfluss dabei unterbrochen wird.

Fig.8 zeigt in schematischer Darstellung eine virtuelle Anordnung von zwei Videos 1, 2 mittels des MCMPs 6. Das erste Video 1 wird mittels des MCMPs 6 virtuell in einer ersten Ebene 15 geladen und abgespielt. Das zweite Video 2 wird mittels des MCMPs 6 virtuell in einer zweiten Ebene 16 geladen und synchron zum ersten Video 1 abgespielt. Die erste Ebene 15 und die zweite Ebene 16 sind parallel und zueinander deckungsgleich angeordnet. In Abhängigkeit von einem mittels des MCMPs 6 der ersten Ebene 15 zugewiesenen ersten Attributes 17 und / oder in Abhängigkeit von einem mittels des MCMPs 6 der zweiten Ebene 16 zugewiesenen zweiten Attributes 18 wird das erste Video 1 und / oder das zweite Video 2 mittels der Anzeige 4 dargestellt.

Das erste Attribut 17 und das zweite Attribut 18 sind z.B. als Index für die Ebenenhöhe ausgeführt, wobei prioritär das in der Ebene höheren Indexes angeordnete Video auf der Anzeige 4 dargestellt wird. Bei einem Umschalten von dem ersten Video 1 zum zweiten Video 2 wird dann mittels des MCMPs 6 der ersten Ebene 15 ein kleinerer Index 17 zugewiesen als der Index 18 der zweiten Ebene 16. Beim Zurücksetzen der Ebenen in die Ausgangspositionen wird der Ebene 15 wieder ein größerer Index 17 und der Ebene 16 wieder der kleinere Index 18 zugewiesen.

Alternativ zum Attribut der Ebenenhöhe kann man beispielsweise auch ein Attribut der Ebenendeckkraft verwenden, wobei einer der Ebenen 15 oder 16 eine Deckkraft kleiner als 1, insbesondere eine Deckkraft von 0 zugeordnet wird. Um lediglich das erste Video 1 darzustellen, wird der ersten Ebene 15 eine Deckkraft von 1 zugewiesen. Allen anderen Ebenen wird dann eine Deckkraft von 0 zugewiesen. Bevorzugt verwendet man aber als Attribut die Indexe für die Ebenenhöhe anstelle der Ebenendeckkraft, damit auch Konstellationen wie Fig.5 möglich sind, wobei Video 1 und Video 2 gleichzeitig auf der Anzeige 4 dargestellt werden, wobei das Video 1 in der ersten Ebene 15 über dem Video 2 in der zweiten Ebene 16 dargestellt wird, wobei Video 1 im Verhältnis zu Video 2 verkleinert dargestellt wird und dadurch das in der zweiten Ebene 16 darunterliegende Video 2 auf der Anzeige 4 zu sehen ist.

Fig.3 beschreibt die "Seite an Seite- Ansicht" zweier Videos als weitere Darstellungsform des MCMP's. Dabei wird eine Trennlinie 12 mittels eines Schiebereglers zwischen zwei Videos 1, 2 so verschoben, dass die Anzeigebereiche der Videos 1, 2 innerhalb der Anzeige 4 vergrößert bzw. verkleinert werden. Wird die Trennlinie 12 nach rechts verschoben, vergrößert sich der linke Anzeigebereich von Video 1. Wird die Trennlinie 12 nach links verschoben, vergrößert sich der rechte Anzeigebereich von Video 2.

Die Verwendung von Videos bei dieser Darstellungsform wird dadurch ermöglicht, dass zumindest zwei Videos 1, 2 wieder in Stapelform deckungsgleich parallel übereinander geladen und synchron abgespielt werden.

Angenommen für den Fall, dass dabei Video 1 auf der oberen Ebene 15 liegt und sich Video 2 auf der unteren Ebene 16 befindet, definiert die Trennlinie 12 das Attribut 17 für die Ausdehnung eines Maskierungspfads, welcher auf die obere Ebene 15 angewandt wird. Wird die Trennlinie 12 nach rechts verschoben, verkleinert sich das Attribut 17 für die Ausdehnung des Maskierungspfades auf der rechten Hälfte von Video 1 und das darunter liegende Video 2 wird von dem darüber liegenden Video 1 zugedeckt. Wird die Trennlinie 12 nach links verschoben, vergrößert sich das Attribut 17 für die Ausdehnung des Maskierungspfades auf der rechten Hälfte von Video 1 und das darunter liegende Video 2 wird von dem darüber liegenden Video 1 aufgedeckt. In Abhängigkeit des zugewiesenen Attributes 17 wird von dem MCMP entweder das Video 1 und / oder das Video 2 mittels der Anzeige 4 bevorzugt dargestellt.

Analog lassen sich die beschriebenen Verfahren für die Ebenenhöhe, Ebenendeckkraft und Ebenenmaskierung auch für mehr als zwei Videos anwenden. Darüber hinaus ergeben sich noch eine Vielzahl weitere Ausführungsformen des MCMPs 6.

Alle Videos sind auch selektiv gruppierbar. Auch kann eine Gruppe mit anderen Gruppen in Stapelform angeordnet und mit den aufgeführten Attributen indexiert und geschaltet werden. Auch können Gruppen selektiv zu einer Multigruppe mit weiteren Ausführungsmöglichkeiten des MCMPs verkoppelt werden. Videogruppen und -Multigruppen können wahlweise gesteuert und prozessiert werden. Es ist denkbar eine selektive Verschlüsselung für Zugangs- und Nutzungsbeschränkungen für die Ansicht von Videos, Videogruppen und Kanäle zu integrieren, um Anwendern mehr Kontrolle über die Verbreitung ihres Materials zu geben.

Das Bedienelement 5 ist als Maus und / oder als Stift und / oder als Touchscreen, insbesondere eines Tablets, und / oder als Tastatur und / oder als Controller und / oder als Joystick ausgeführt. Weitere Bedienelemente sind denkbar.

Die Trennlinien 12, 12,2 und 12.3 aus Fig. 3, Fig. 3.5, Fig. 3.6 und Fig. 3.7 sind insbesondere mittels der Maus mit gedrückter linker Maustaste oder mittels der Bewegung eines Fingers oder eines Stiftes auf dem Touchdisplay, insbesondere eines Tablets, nach rechts oder nach links verschiebbar.

Die im Vorhinein beschriebenen Ausführungsformen des MCMPs 6 mit den zugehörigen Darstellungsarten 8, 9, 13 sind insbesondere hinsichtlich eines Layouts der graphischen Benutzeroberfläche lediglich beispielhaft gewählt. Im Sinne der Erfindung sind selbstverständlich weitere Ausführungsformen des MCMPs 6 mit den zugehörigen Darstellungsarten 8, 9, 13 insbesondere hinsichtlich eines Layouts denkbar.

### Bezugszeichenliste

- 1: erstes Video
- 2: zweites Video
- 3: Client
- 4: Anzeige
- 5: Bedienelement
- 6: Mehrkanal-Mediaplayer (Multichannel Mediaplayer, MCMP)
- 7: Steuerungselemente
- 8: erste Darstellungsart
- 9: zweite Darstellungsart, bzw. erweiterte zweite Darstellungsart
- 10: Server
- 11: Webbrowser
- 12: Trennlinie
- 12.2: zweite Trennlinie
- 12.3.: dritte Trennlinie
- 13: dritte Darstellungsart
- 14: Miniaturansicht
- 15: erste Ebene
- 16: zweite Ebene
- 17: erstes Attribut
- 18: zweites Attribut
- 19: drittes Video
- 20: viertes Video
- 21: Ebenen-Auswahlschalter
- 22: Trennlinien-Anfasser (Linksklick), Trennlinien-Auswahlschalter (Doppelklick/Rechtsklick)

## Patentansprüche

1. Computerimplementiertes Verfahren zur wahlweisen oder gleichzeitigen Anzeige zumindest zweier Videos (1, 2), wobei ein Client (3) zumindest eine (Client-)Anzeige (4) und ein Bedienelement (5) aufweist, wobei die zumindest zwei Videos (1, 2) synchron mittels eines Mehrkanal-Mediaplayers (Multichannel Mediaplayer, MCMP (6)) abgespielt werden, wobei die zumindest zwei Videos (1, 2) synchron durch gemeinsame Steuerungselemente (7) gesteuert werden, so dass die zumindest zwei Videos (1, 2) gemeinsam gestartet, wiedergegeben oder pausiert werden, wobei die Steuerungselemente (7) mittels des MCMPs (6) bereitgestellt werden, wobei die Steuerungselemente (7) mittels des Bedienelementes (5) von einem Benutzer bedienbar sind, wobei zumindest zwei Darstellungsarten (8, 9) der beiden Videos (1, 2) mittels des MCMPs (6) bereitgestellt werden, wobei in einer ersten Darstellungsart (8) lediglich eines der zumindest zwei Videos (1, 2) mittels der Anzeige (4), insbesondere in einer Einzelbildansicht, dargestellt wird, wobei bei einem Umschalten des mittels der Anzeige (4) dargestellten Videos (1, 2) in der ersten Darstellungsart (8) von einem ersten Video (1) zu einem zweiten Video (2) oder umgekehrt das Umschalten auch während des Abspielens unterbrechungsfrei erfolgt, wobei in einer zweiten Darstellungsart (9) zumindest zwei der Videos (1, 2) zumindest teilweise nebeneinander dargestellt werden, **dadurch gekennzeichnet, dass** die zumindest zwei Videos (1, 2) und der MCMP (6) von einem Server (10) oder von mehreren Servern (10) an den Client (3) übertragen werden, wobei der MCMP (6) mittels eines des Clients (3) eigenen Webbrowsers (11) ausgeführt wird.

2. Verfahren nach Anspruch 1, **dadurch gekennzeichnet, dass** die Videos (1, 2) sich auf unterschiedlichen Ebenen in einer stapelbaren Anordnung befinden.

3. Verfahren nach einem der vorangehenden Ansprüche, **dadurch gekennzeichnet, dass** zur Ausführung des MCMPs (6) mittels des Webbrowsers (11) ein Webbrowser-Code, insbesondere ein HTML-Code, insbesondere ein HTML5-Code, ausgeführt wird.

4. Verfahren nach einem der vorangehenden Ansprüche, **dadurch gekennzeichnet, dass** in der zweiten Darstellungsart zwei deckungsgleich übereinanderliegende Videos (1, 2) dargestellt werden, wobei auf einer ersten Seite der Trennlinie (12) zumindest ein Teil des ersten Videos (1) und auf einer zweiten Seite der Trennlinie (12) zumindest ein Teil des zweiten Videos (2) mittels der Anzeige (4) dargestellt wird, wobei die Trennlinie (12) in Abhängigkeit einer Eingabe des Bedienelementes (5) in ihrer Position oder Form veränderbar ist.

5. Verfahren nach Anspruch einem der vorstehenden Ansprüche, **dadurch gekennzeichnet, dass** Benutzer Videos (1, 2) in Form von Aufnahmen verschiedener Kameras hochladen oder streamen, um alle Aufnahmen miteinander zusammen synchronisiert abzuspielen und ein und dasselbe Ereignis aus verschiedenen Perspektiven zu betrachten und mit anderen teilen zu können.

6. Verfahren nach einem der vorangehenden Ansprüche, **dadurch gekennzeichnet, dass** die Ansicht der Videos (1, 2) in Abhängigkeit einer Eingabe des Bedienelementes (5) gleichzeitig oder einzeln verlustfrei zoombar und / oder skalierbar ist.

7. Verfahren nach einem der vorangehenden Ansprüche, **dadurch gekennzeichnet, dass** zur Ausbildung einer dritten, Bild-in-Bild Darstellungsart (13) zumindest das eine Video (1) gegenüber dem anderen Video (2) überlagert angezeigt wird.

8. Verfahren nach einem der vorangehenden Ansprüche, **dadurch gekennzeichnet, dass** das erste Video (1) mittels des MCMPs (6) virtuell in einer ersten Ebene (15), insbesondere an einer bestimmten, absoluten Position, geladen und abgespielt wird, wobei das zweite Video (2) mittels des MCMPs (6) virtuell in einer zweiten Ebene (16), insbesondere an einer bestimmten, absoluten Position, geladen und synchron zum ersten Video (1) abgespielt wird, wobei die erste und die zweite Ebene (15, 16) parallel zueinander angeordnet sind, wobei in Abhängigkeit von einem mittels des MCMPs (6) der ersten Ebene (1) zugewiesen ersten Attributes (17) und / oder in Abhängigkeit von einem mittels des MCMPs (6) der zweiten Ebene (16) zugewiesen zweiten Attributes (18) das erste und / oder das zweite Video (1, 2) mittels der Anzeige (4) dargestellt wird.

9. Verfahren nach Anspruch 8, **dadurch gekennzeichnet, dass** das erste und das zweite Attribut (17, 18) als Index ausgeführt sind, wobei prioritär das in der Ebene (15 oder 16) höheren Indexes angeordnete Video (1 oder 2) auf der Anzeige dargestellt wird.

10. Verfahren nach einem der vorangehenden Ansprüche, **dadurch gekennzeichnet, dass** ein erster, freigestellter Teil zumindest eines der Videos (1 oder 2) dargestellt wird, wobei ein zweiter Teil des zumindest einen Videos (1 oder 2) nicht dargestellt wird.

11. Verfahren nach einem der vorangehenden Ansprüche, **dadurch gekennzeichnet, dass** mittels auf Server- und / oder Cloudbasiertem Image-Processing Bildverbesserungseffekte und/oder Filter für die Videobearbeitung via WEB-API zur Verfügung stehen, welche auf zumindest einem Video (1, 2) angewandt werden.

12. Verfahren nach einem der vorangehenden Ansprüche, **dadurch gekennzeichnet, dass** das Bedienelement (5) als Maus und / oder als Stift und / oder als Touchscreen, insbesondere eines Tablets, und / oder als Tastatur und / oder als Controller und / oder als Joystick ausgeführt ist.
